# EUROPÄISCHE PATENTSCHRIFT

(11) **EP 1 704 332 B1**
(45) Veröffentlichungstag und Bekanntmachung des Hinweises auf die Patenterteilung: **14.11.2007**
(21) Anmeldenummer: 04804386.3
(22) Anmeldetag: 29.12.2004
(51) Int. Cl.: F15B 11/16, F15B 11/22

(54) **STROMVENTIL UND STROMTEILER MIT MEHREREN STROMVENTILEN**
FLOW VALVE AND FLOW DISTRIBUTOR COMPRISING SEVERAL FLOW VALVES
REGULATEUR DE DEBIT ET DIVISEUR DE DEBIT POURVU DE PLUSIEURS REGULATEURS DE DEBIT

(30) Priorität: 07.01.2004 DE 102004001253; 03.03.2004 DE 102004010374
(43) Veröffentlichungstag der Anmeldung: 27.09.2006
(73) Patentinhaber: Bosch Rexroth AG, 70184 Stuttgart (DE)
(72) Erfinder: KRUG-KUSSIUS, Karl, 97783 Karsbach (DE)
(74) Vertreter: Polte, Willi
(86) Internationale Anmeldenummer: PCT/EP2004/014800
(87) Internationale Veröffentlichungsnummer: WO 2005/066505

(56) Entgegenhaltungen:
- EP-A- 0 958 455
- EP-A- 1 088 995
- WO-A-00/00747
- WO-A-95/32364
- DE-A1- 2 260 457
- DE-A1- 10 058 032
- DE-A1- 19 531 497
- DE-B- 1 222 376
- DE-U1- 9 318 522
- US-A- 5 460 000

## Beschreibung

Die Erfindung betrifft ein Stromventil für einen Stromteiler zur Druckmittelversorgung mehrerer hydraulischer Verbraucher gemäß dem Oberbegriff des Patentanspruches 1 sowie einen Stromteiler mit derartigen Stromventilen.

Hydraulische Stromteiler sorgen dafür, dass ein gegebener Druckmittelstrom lastdruckunabhängig in gewünschten Teilmengen über mehrere parallel zueinander angeordnete hydraulische Verbraucher oder hydraulische Lasten fließt. Wenn der Druckmittelstrom derart gerichtet ist, dass die einzelnen Stromventile des Stromteilers stromauf der hydraulischen Verbraucher angeordnet sind, spricht man vom Betriebszustand Teilen. Liegen die einzelnen Stromventile dagegen stromab der hydraulischen Verbraucher, spricht man vom Betriebszustand Summieren.

Jedes Stromventil eines Stromteilers umfaßt eine Meßblende und eine Druckwaage, die beim Teilen stromab der Meßblende liegt. Die Druckwaagen werden beim Teilen in Schließrichtung vom höchsten Lastdruck beaufschlagt und drosseln zwischen der jeweiligen Zumeßblende und der Last den Fluidstrom so stark an, dass der Druck nach allen Zumeßblenden gleich dem höchsten Lastdruck ist oder leicht über diesem liegt. Hinsichtlich dieser Anordnung und der Druckbeaufschlagung der Druckwaagen gleicht ein Stromteiler einer sogenannten LUDV-Steuerung, wie sie zum Beispiel die WO 95/32364 zeigt und die ein Sonderfall einer Load Sensing Steuerung ist. Bei einer solchen Steuerung wird der höchste Lastdruck an eine Verstellpumpe gemeldet und diese so geregelt, dass in der Pumpenleitung ein um eine bestimmte Druckdifferenz Δp über dem Lastdruck liegender Pumpendruck herrscht. Bei einer LUDV-Steuerung bleibt die Aufteilung der einzelnen Teilströme auch bei einem Abfall des Pumpendrucks erhalten. Denn in diesem Fall der sogenannten Unterversorgung ändert sich an dem Druck stromab der Zumeßblenden nichts. Vor allen Zumeßblenden steht in gleicher Weise der abgefallene Pumpendruck an, so dass sich an allen Zumeßblenden die Druckdifferenz in gleicher Weise verändert hat.

Stromteiler können unabhängig davon verwendet werden, ob als Druckmittelquelle eine Konstantpumpe oder eine Verstellpumpe benutzt wird und wie die Verstellpumpe verstellt wird. Beim Einsatz in einem Fahrantrieb wird die Fördermenge zum Beispiel in Abhängigkeit von der Auslenkung eines Joysticks oder eines Pedals eingestellt und dann durch den Stromteiler den hydraulischen Verbrauchern in den gewünschten Mengenverhältnissen zugeteilt.

Ein "Summieren von Druckmittelteilmengen kann die Steuerung nach der WO 95/32364 nicht leisten. Beim Summieren muß nämlich dafür gesorgt werden, dass die Druckwaagen in Schließrichtung nicht mehr vom höchsten, sondern vom niedrigsten der zwischen Durckwaagen und Verbraucher anstehenden Drücke beaufschlagt sind, wobei hier der Druck am lasthöchsten Verbraucher der niedrigste ist.

Ein Stromteiler für Teilen und Summieren ist aus der DE 195 31 497 A1 bekannt. Bei einer derartigen Steueranordnung sind die den Verbrauchern zugeordneten Druckwaagen über Zentrierfedern in eine Öffnungsstellung vorgespannt, wobei diese über ein Schaltventil im Betriebszustand "Teilen" mit dem höchsten Lastdruck und im Betriebszustand "Summieren" mit dem jeweils niedrigsten wirksamen Lastdruck beaufschlagt werden, so dass in beiden Betriebszuständen der Druckabfall über den Messblenden lastdruckunabhängig konstant gehalten werden kann.

Nachteilig bei dieser bekannten Lösung ist, dass das Schaltventil entsprechend des Betriebszustands angesteuert werden muss und dass ein erheblicher vorrichtungstechnischer Aufwand zum Abgreifen des höchsten bzw. niedrigsten Lastdruckes erforderlich ist.

Demgegenüber liegt der Erfindung die Aufgabe zugrunde, ein Stromventil sowie einen mit derartigen Stromventilen aufgebauten Stromteiler zu schaffen, bei denen die Betriebszustände "Teilen" und "Summieren" mit minimalem Aufwand realisierbar sind.

Diese Aufgabe wird hinsichtlich des Stromventils durch die Merkmale des Patentanspruches 1 und hinsichtlich des Stromteilers durch die Merkmale des Patentanspruches 13 gelöst.

Das erfindungsgemäße, jeweils einem Verbraucher zugeordnete Stromventil hat eine Zumessblende und eine Druckwaage, die auf der einen Steite der Zumessblende den höchsten oder den niedrigsten Lastdruck einregelt. Ein Druckwaagenkolben der Druckwaage ist erfindungsgemäß mit zwei Steuerkanten ausgeführt, von denen eine dem Betriebszustand "Summieren" und die andere dem Betriebszustand "Teilen" zugeordnet ist. Das Stromventil hat des Weiteren eine LS-Steuerkante, über die bei vollständig geöffneter Druckwaage zum Lastmelden in eine LS-Leitung ein LS-Querschnitt aufsteuerbar ist. Bei aufgesteuertem LS-Querschnitt kann dann der Druck in einem Druckmittelströmungspfad zwischen der Zumessblende und dem Eingang der Druckwaage abgegriffen werden. Dieser Druck entspricht in erster Näherung dem Lastdruck am zugeordneten Verbraucher, wenn die Druckwaage vollständig aufgesteuert ist. Dies ist beim "Teilen" bei dem den höchsten Lastdruck führenden Verbraucher der Fall, da die Druckwaage des diesem Verbraucher zugeordneten Stromventils vollständig geöffnet ist, während die Druckwaagen der anderen, lastniedrigeren Verbrauchern zugeordneten Stromventile in Regelpositionen verschoben sind, um den Ausgangsdruck nach den Zumessblenden auf den niedrigeren Lastdruck dieser Verbraucher abzudrosseln.

Im Betriebszustand "Summieren" entspricht der Druck in dem angesprochenen Druckmittelströmungspfad im wesentlichen demjenigen des lastniedrigsten Verbrauchers, wobei dessen Druckwaage zu Beginn der Ansteuerung die geringste Druckmittelmenge zuströmt und diese geöffnet wird oder bleibt, während durch die Druckwaagen der anderen, lasthöheren Verbraucher der Druck im Druckmittelströmungspfad abgedrosselt wird, bis sich über dem Druckwaagenkolben ein Kräftegleichgewicht einstellt.

Erfindungsgemäß erfolgt das Umschalten zwischen "Teilen" und "Summieren" somit automatisch, wobei das Umschalten durch Abgreifen eines dem höchsten Lastdruck ("Teilen") entsprechenden Drucks bzw. eines dem niedrigsten Lastdruck ("Summieren") entsprechenden Druckes im Druckmittelströmungspfad zwischen der geöffneten Druckwaage und der Zumessblende erfolgt. Bei den Stromventilen der lasthöheren bzw. der lastniedrigeren Verbraucher ist der LS-Querschnitt zugesteuert, so dass die entsprechenden Druckwaagen an einer Steuerfläche in Schließrichtung mit dem dem höchsten Lastdruck entsprechenden Druck ("Teilen") bzw. in Öffnungsrichtung mit dem dem niedrigsten Lastdruck entsprechenden Druck ("Summieren") beaufschlagt sind.

Bei einer besonders bevorzugten Lösung ist die Druckwaage des Stromventils in der Grundposition geöffnet.

Das Aufsteuern des LS-Querschnitts kann über ein 2/2-Wegeventil erfolgen, das mit zwei LS-Steuerkanten ausgeführt ist, von denen eine dem "Summieren" und die andere dem "Teilen" zugeordnet ist.

Bei einer besonders kompakten Variante der Erfindung ist das Wegeventil in einen Druckwaagenkolben integriert, wobei ein Innenkolben des Wegeventils in einer Führungsbohrung des Druckwaagenkolbens geführt ist und einen Steuerbund hat, an dessen beiden Ringstirnflächen die beiden vorgenannten LS-Steuerkanten ausgebildet sind.

Das Betätigen des Innenkolbens (Umschalten des Wegeventils) erfolgt durch Beaufschlagen einer Stirnfläche mit dem Pumpendruck und der anderen Stirnfläche mit dem in der LS-Leitung anliegenden LS-Druck. Beim "Teilen" wird der Innenkolben dann durch den hohen Pumpendruck in eine erste Schaltstellung und beim "Summieren" aufgrund des geringen Pumpendrucks in eine andere Schaltstellung verschoben, in denen jeweils eine der genannten LS-Steuerkanten wirksam ist, um den LS-Querschnitt aufzusteuern.

Bei einer derartigen Lösung wird es bevorzugt, wenn die LS-Leitung in einem LS-Federraum der Druckwaage mündet, wobei durch Aufsteuern des LS-Querschnitts eine Verbindung zwischen dem Federraum und einem den dem Lastdruck entsprechenden Druck führenden Kanal hergestellt wird.

Bei einer vorteilhaften Variante der Erfindung hat die Druckwaage einen weiteren Federraum, der mit dem LS-Federraum über einen Verbindungskanal verbunden ist, der sich entlang des Außenumfangs des Innenkolbens erstreckt.

Der Aufbau des Stromventils lässt sich weiter vereinfachen, wenn sich der Innenkolben über den LS-Federraum hinaus erstreckt und an diesem aus der Druckwaage herausgeführten Endabschnitt ein Führungsbund ausgeführt ist, der in einem Druckraum einer Verschlussschraube des Stromventils geführt ist. In diesem Druckraum ist ein Anschlag für den Innenkolben ausgeführt und er ist des Weiteren mit dem Pumpendruck beaufschlagt.

Zur besseren Führung des Innenkolbens kann dieser mit einem Radialbund ausgeführt sein, der entlang des Innenumfangabschnitts der Führungsbohrung des Druckwaagenkolbens anliegt. Dabei sind entweder am Außenumfang des Steuerbundes und des Radialbundes oder entlang den Innenumfangsflächen der Führungsbohrung Längskerben ausgeführt, die eine Druckmittelströmung zwischen den beiden Federräumen ermöglichen.

Der Druckwaagenkolben wird vorzugsweise mit einer mittleren Steuernut ausgeführt, an deren Stirnflächen die beiden Steuerkanten ausgeführt sind. Dabei ist der Druckwaagenkolben über zwei Zentrierfedern in seine geöffnete Mittelstellung vorgespannt.

Zum Abgreifen des Drucks im Druckmittelströmungspfad zwischen der Druckwaage und der Zumessblende ist der Druckwaagenkolben mit einer oder mehreren Radialbohrungen ausgeführt.

Es wird bevorzugt, die Stromventile jeweils mit einem Druckeinspeiseventil auszuführen, über das die Verbraucher gegen Überlast von außen gesichert sind und des weiteren Druckmittel eingespeist wird, falls ein Füllungsmangel entsteht, so dass Kavitationserscheinungen vermieden werden und das System kraftschlüssig bleibt.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 ein Funktionsschaubild eines Stromteilers im "Teilen"-Betriebszustand;
Figur 2 eine Schnittdarstellung eines Stromventils aus Figur 1;
Figur 3 eine Detaildarstellung einer Druckwaage des Stromventils aus Figur 2;
Figur 4 einen Innenkolben der Druckwaage aus Figur 3 in unterschiedlichen Betriebspositionen beim "Teilen";
Figur 5 das Stromventil eines lastniedrigeren Verbrauchers beim "Teilen";
Figur 6 das Funktionsschaubild gemäß Figur 1 im "Summieren"-Betriebszustand;
Figur 7 Positionen des Innenkolbens gemäß Figur 4 beim "Summieren";
Figur 8 eine Schnittdarstellung eines Stromventils eines lastniedrigeren Verbrauchers und
Figur 9 ein Schaltsymbol eines erfindungsgemäßen Stromventils.

Prinzipiell ist das erfindungsgemäße Konzept bei hydrostatisch angetriebenen Maschinen mit geschlossenem oder offenem hydraulischem Kreislauf einsetzbar, wobei ein Anwendungsschwerpunkt bei rotatorischen Antrieben, bspw. Windenantrieben, Bandantrieben oder Fahrantrieben liegt.

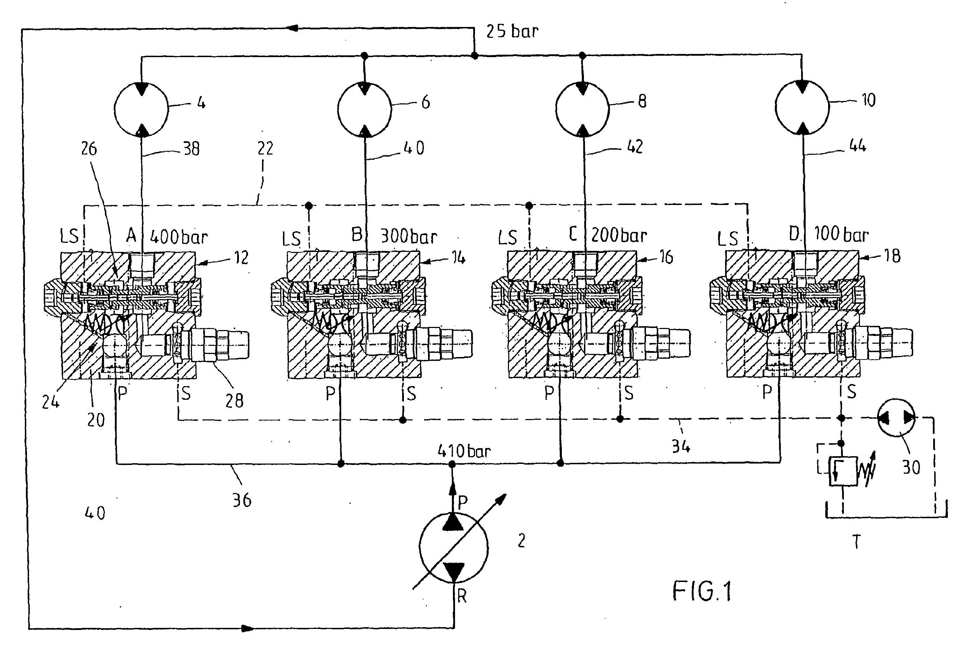

In Figur 1 ist ein Funktionsschaubild eines Stromteilers für einen Fahrantrieb eines mobilen Arbeitsgerätes dargestellt. Die Steueranordnung ist als geschlossener Kreislauf ausgeführt und hat eine Ver-stellpumpe 2. Der Fahrantrieb hat vier Hydromotoren 4, 6, 8, 10, die von der Pumpe 2 mit Druckmittel versorgt werden.

Die Druckmittelverteilung erfolgt beim dargestellten Ausführungsbeispiel über Stromventile 12, 14 16, 18, die jeweils einem der Verbraucher 4, 6, 8, 10 zugeordnet sind. Die Stromventile 12, 14, 16, 18 sind als Ventilsegmente ausgeführt und zu einem Steuerblock zusammengefasst.

Wie beispielhaft am Stromventil 12 gezeigt, hat jedes Ventilsegment eine Gehäusescheibe 20, an der ein Druckanschluss P, ein Speiseanschluss S, ein Arbeitsanschluss A (B, C, D) und ein LS-Anschluss LS ausgebildet sind. Die Lastdruckanschlüsse LS der Steueranordung 1 sind über eine LS-Leitung 22 miteinander verbunden. In der Gehäusescheibe 20 sind eine veränderliche bzw. variable Zumessblende 24, eine Druckwaage 26 sowie ein Druckeinspeiseventil 28 vorgesehen. In Strömungsrichtung zum Verbraucher 4 ist die Druckwaage 26 stromabwärts der Zumessblende 24 an-geordnet. Wie eingangs erwähnt, wird über die Druckwaage 26 der Druckabfall über der variablen Messblende 24 lastdruckunabhängig konstant gehalten, so dass die Druckmittelvolumenströme durch die Zumessblende 24 nur von deren Öffnungsquerschnitt abhängen.

Über das Druckeinspeiseventil ist der Druck am Arbeitsanschluss A (B, C, D) auf einen Maximalwert begrenzt, so dass der Verbraucher 4 (6, 8, 10) gegen Überlast gesichert ist. Des Weiteren kann über das Druckeinspeiseventil 28 in bekannter Weise bei einem Füllungsmangel, beispielsweise bei Bergabfahrt oder ziehender Last, über den Speiseanschluss S und gege-benenfalls über eine Pumpe 30 Druckmittel nachgefördert werden. Dabei wird durch diese Druckmittel aus einem Tank T angesaugt und über einen Speisekanal 34 zum jeweiligen Speiseanschluss S der Stromventile 12, 14, 16, 18 gefördert.

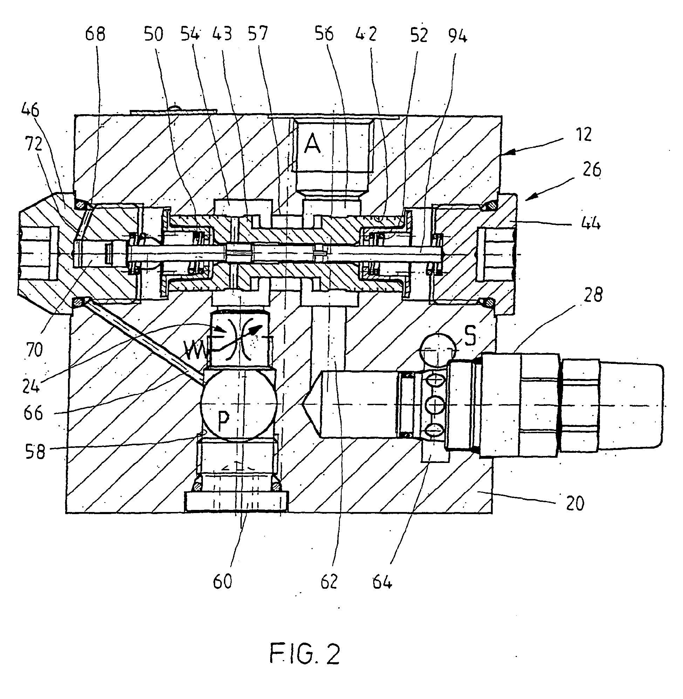

Der Druckanschluss P der Verstellpumpe 2 ist über eine sich verzweigende Druck- oder Zulaufleitung 36 mit den Druckanschlüssen P der Ventilsegmente verbunden. Der jeweilige Arbeitsanschluss A, B, C, D der Stromventile 12, 14. 16, 18 ist über eine Vorlaufleitung 38, 40, 42, 44 mit den Druckanschlüssen der Verbraucher 4, 6, 8, 10 verbunden. Das Druckmittel strömt von diesen über eine gemeinsame Rücklaufleitung 40 zum Sauganschluss R der Verstellpumpe 2 zurück. In Figur 2 ist das Stromventil 12 aus Figur 1 vergrößert dargestellt. Die anderen Stromventile 14, 16, 18 haben einen identischen Aufbau.

Die Ventilscheibe 20 ist in der Darstellung gemäß Figur 2 in Horizontalrichtung von einer Druckwaagenbohrung 42 durchsetzt, die stirnseitig von jeweils einer Verschlussschraube 44, 46 verschlossen ist. In der Druckwaagenbohrung 24 ist ein Druckwaagenkolben 43 axial verschiebbar geführt, der über Zentrierfedern 50, 52 in eine Mittelposition vorgespannt ist. Die Druckwaagenbohrung 42 ist im mittleren Bereich zu zwei Ringräumen 54, 56 erweitert, zwischen denen ein Ringsteg 57 stehen bleibt. Der Ringraum 56 ist mit dem Arbeitsanschluss A verbunden, während im Ringraum 54 eine in Figur 2 vertikal verlaufende Messblendenbohrung 58 mündet, in die die Zumessblende 24 eingesetzt ist. Deren konstruktiver Aufbau wird in einer eigenen Anmeldung detailliert erläutert und spielt für die vorliegende Erfindung keine Rolle. Es sei lediglich angenommen, dass die Zumessblende 24 mit veränderlichem Querschnitt ausgeführt ist. Die Erfindung ist jedoch nicht auf eine derartige Konstruktion beschränkt.

In der Messblendenbohrung 58 mündet der Druckanschluss P, der sich bei dem in Figur 2 dargestellten Ausführungsbeispiel senkrecht zur Zeichenebene erstreckt. Die Messblendenbohrung 58 ist nach unten hin (Ansicht nach Figur 2) von einer Schraube 60 verschlossen.

In dem Ringraum 56 mündet des Weiteren noch eine Winkelbohrung 62, in deren horizontal verlaufenden Schenkel das in Patronenbauweise ausgeführte Druckeinspeiseventil 28 eingeschraubt ist. Der Speiseanschluss S mündet über einen in Figur 2 senkrecht zur Zeichenebene verlaufenden Kanal in einer Kammer 64, die eine Radialerweiterung der Messblendenbohrung 58 ist.

Der Druckanschluss P ist über einen Schrägkanal 66 mit einem Ringkanal 68 verbunden, der den Außenumfang der Verschlussschraube 46 ringförmig umgreift. In der Verschlussschraube 46 ist ein sich koaxial zur Druck-waagenbohrung 42 erstreckender Druckraum 70 ausgebildet, der über einen Verbindungskanal 72 mit dem Ringkanal 68 verbunden ist, so dass im Druckraum 70 stets der Druck am Druckanschluss P, d.h. der Pumpendruck anliegt.

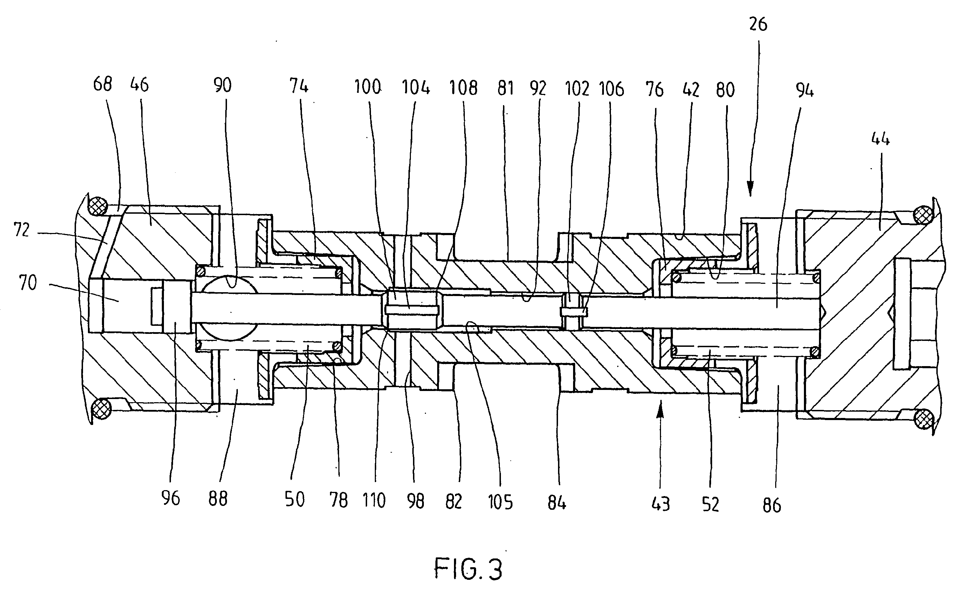

Der Aufbau der Druckwaage wird anhand der vergrößerten Darstellung in Figur 3 erläutert.

Demgemäß sind die Zentrierfedern 50, 52 des Druckwaagenkolbens 43 jeweils an den benachbarten Verschlussschrauben 46 bzw. 44 abgestützt und greifen am Druckwaagenkolben 43 über tassenförmige Federteller 74 bzw. 76 an und tauchen dabei abschnittsweise in stirnseitige Aufnahmen 78, 80 des Druckwaagenkolbens 43 ein, so dass die Druckwaage in Axialrichtung sehr kurz baut.

Im Mittelbereich des Druckwaagenkolbens 43 ist umfangsseitig eine umlaufende Steuernut 81 vorgesehen, deren Ringstirnflächen zwei Steuerkanten bilden, die mit dem Ringsteg 57 zusammenwirken. Dabei ist die in Figur 3 linke Steuerkante, im folgenden "Teilen"-Steuerkante 82 genannt, während des "Teilens" und die rechte, im folgenden "Summieren"-Steuerkante 84 genannt, während des "Summierens" wirksam. Gemäß Figur 2 stehen die beiden Steuerkanten 82, 84 in der dargestellten Grundposition im Abstand zum Ringsteg 57, so dass die Druckmittelverbindung vom Arbeitsanschluss A (B, C, D) zur Messblendenbohrung 58 und damit zum Druckanschluss P geöffnet ist.

Die Zentrierfeder 52 ist in einem Federraum 86 angeordnet, der stirnseitig vom Druckwaagenkolben 43 und von der Verschlussschraube 44 begrenzt ist. Der andere Endabschnitt des Druckwaagenkolbens 43 begrenzt ge-meinsam mit der Verschlussschraube 46 einen LS-Federraum 88, in dem der Lastmeldeanschluss LS über einen sich senkrecht zur Zeichenebene erstreckenden Kanal 90 mündet. Demzufolge liegt im LS-Federraum 88 aller Stromventile 12, 14, 16, 18 jeweils der gleiche Druck an, der beim "Teilen" etwa dem höchsten Lastdruck und beim Summieren etwa dem niedrigsten Lastdruck der Verbraucher entspricht.

Gemäß Figur 3 ist der Druckwaagenkolben 43 in Axialrichtung von einer Führungsbohrung 92 durchsetzt, in der ein Innenkolben 94 axial verschiebbar geführt ist. Dieser durchsetzt mit seinem linken Endabschnitt den LS-Federraum 88 und hat dort einen Führungsbund 96, mit dem er dichtend im Druckraum 70 der Verschlussschraube 46 geführt ist.

Der andere Endabschnitt erstreckt sich in den Federraum 86 hinein und ist in seiner dargestellten Endposition an der Verschlussschraube 44 abgestützt. Beim Verschieben des Innenkolbens 94 nach links läuft sein linker Endabschnitt auf den Boden des Druckraums 70 auf, so dass die Endpositionen jeweils durch Auflaufen auf die Verschlussschrauben 44 oder 46 begrenzt sind.

Links von der Steuernut 81 ist im Druckwaagenkolben 43 zumindest eine Radialbohrungen 98 ausgeführt, die einerseits in der Führungsbohrung 92 und andererseits im Ringraum 54 mündet. Im Bereich dieser Radialbohrungen 98 ist am Innenkolben 94 ein radial vorspringender Steuerbund 100 ausgebildet. Im Abstand rechts von diesem ist ein Radialbund 102 vorgesehen, über die der Innenkolben 94 in der Führungsbohrung 92 geführt ist. Die an die Bünde 100, 102 angrenzenden Abschnitte des Innen-kolbens 43 sind mit geringerem Durchmesser ausgeführt und bilden mit der Innenumfangsfläche der Führungsbohrung 92 einen Ringraum. Wie in Figur 3 dargestellt, sind der Steuerbund 100 und der Radialbund 102 mit Längskerben 104, 106 ausgeführt, so dass eine Steuerölströmung entlang den genannten Ringspalten und den Längskerben 104, 106 zwischen den Federräumen 86, 88 möglich ist. Rechts von den Radialbohrungen 98 ist die Führungsbohrung 92 radial zu einem Abschnitt 105 erweitert, der mit dem Außenumfang des Steuerbunds 100 einen Ringspalt bildet.

An den Ringstirnflächen des Steuerbunds 100 sind LS-Steuerkanten 108, 110 ausgebildet, wobei die Steuerkante 110 beim Stromventil des lastdruckhöchsten Verbrauchers beim "Teilen" und beim "Summieren" die LS-Steuerkante 108 des dem lastniedrigsten Verbraucher zugeordneten Stromventils wirksam ist.

Zur weiteren Erläuterung der Funktion sei zunächst angenommen, dass die Steueranordnung 1 im Betriebszustand "Teilen" betrieben wird. Gemäß Figur 1 soll der Lastdruck des Verbrauchers 4 - 400 bar, der am Verbraucher 6 - 300 bar, der am Verbraucher 8 - 200 bar und der am Verbraucher 10 - 100 bar betragen, entsprechend wird durch Schwenken der Pumpe ein Pumpendruck aufgebaut, welche somit 410 bar liefert (bei einer "10-bar-Zumess-Feder"). Dieser Pumpendruck (410 bar) liegt über den Kanal 66 auch im Druckraum 70 an, so dass die linke Stirnfläche des Innenkolbens mit dem Pumpendruck belastet ist, während auf seine rechte Stirnfläche ein niedrigerer Druck, wie im folgenden beschrieben, der Druck im Druckraum 54 wirkt. Über der Zumessblende 24 des Stromventils 12 fällt bei dem dargestellten Ausführungsbeispiel ein Druck von 10 bar ab, der Druckabfall über der Druckwaage 26 ist in der Mittelstellung vernachlässigbar. Der Druck am Ausgang der Zumessblende 24 wirkt auf die rechte Stirnfläche des Innenkolbens 43. Dieser Druck entspricht in der Öffnungsstellung der Druckwaage 26 dem höchsten Lastdruck, das heißt demjenigen am Arbeitsanschluss A. Durch die Druckdifferenz (Pumpendruck minus maximalen Lastdruck) wird der Innenkolben 94 nach rechts in die in Figur 3 dargestellte Position bewegt, in der er mit seinem rechten Endabschnitt an der Verschlussschraube 44 anliegt. In dieser Position öffnet die LS-Steuerkante 110 des Steuerbundes 100 einen LS-Querschnitt, über den die Radialbohrungen 98 mit dem Federraum 88 verbunden sind, so dass der Druck im Ringraum 54 auch im Federraum 88 anliegt. D.h., dieser Druck von 400 bar (höchster Lastdruck) wird über die LS-Leitung 22 auch in die Druckräume 88 der anderen Stromventile gemeldet. Die Innenkolben 94 der andern, den lastniedrigeren Verbrauchern zugeordneten Druckwaagen 26 werden durch den hohen Pumpendruck ebenfalls in die in Figur 3 dargestellte Endposition nach rechts verschoben werden.

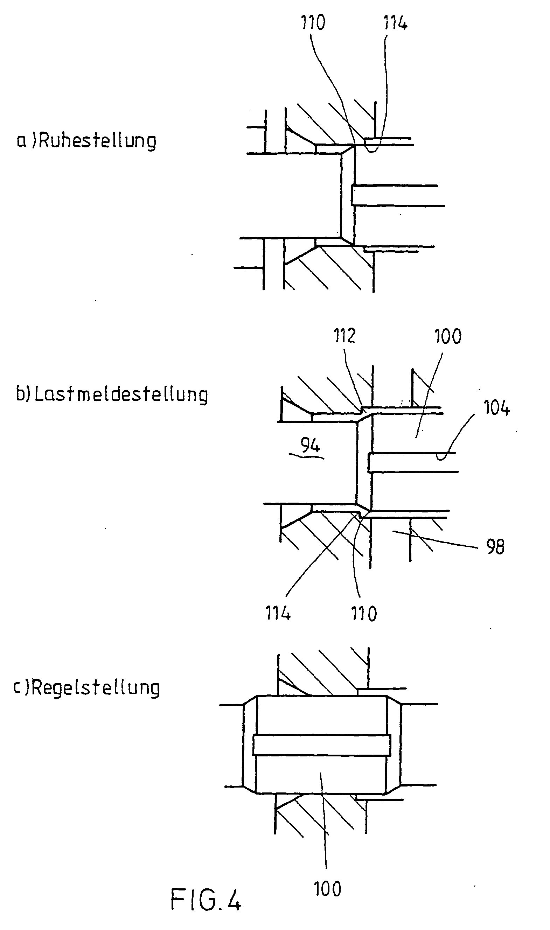

In Figur 4 ist zum besseren Verständnis der mit der Steuerkante 110 versehene Bereich des Innenkolbens 94 und die angrenzenden Bereiche des Druckwaagenkolbens 43 dargestellt. Figur 4b) zeigt dabei die vorbeschriebene Lastmeldestellung der Druckwaage 26 des lasthöchsten Verbrauchers 4, in der der höchste Lastdruck (400 bar) in die LS-Leitung 22 gemeldet wird. Wie erwähnt, steuert in der Mittelposition des Druckwaagenkolbens 43 und in der rechten Endposition des Innenkolbens 94 die Steuerkante 110 des Steuerbundes 100 einen LS-Querschnitt 112 zur Lastmeldung auf, so dass im Federraum 88 der entsprechende Lastdruck, genauer gesagt, der Druck am Ausgang der Zumessblende 24 anliegt. Dieser wird über den vorbeschriebenen Ringspalt mit dem radial erweiterten Abschnitt 105 und der Längskerbe 106 auch in den rechten Federraum 86 gemeldet, so dass der Druckwaagenkolben 43 des Stromventils 12 stirnseitig druckausgeglichen ist und in seiner Mittelstellung verbleibt - die Druck-waage 26 des lastdruckhöchsten Verbrauchers ist somit vollständig geöffnet und drosselt den Druckmittelvolumenstrom nicht an.

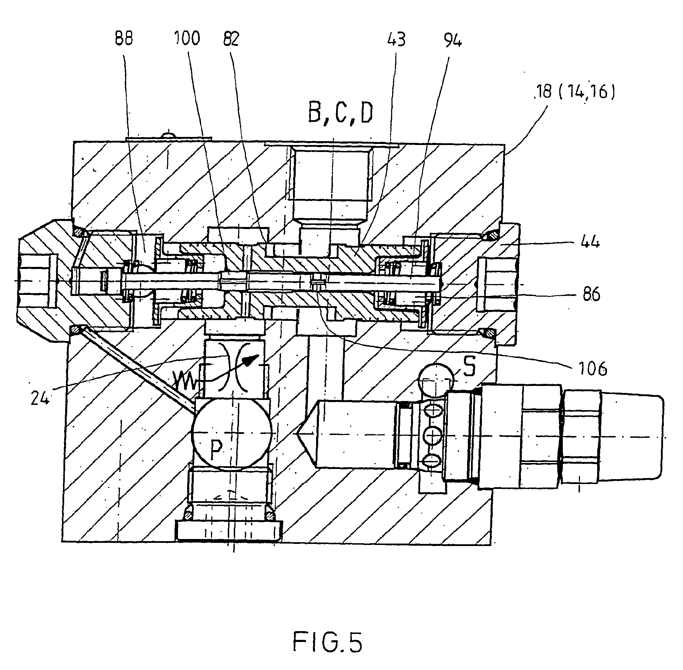

Figur 5 zeigt beispielhaft eine Regelposition, die die Stromventile 14, 16, 18 der lastniedrigeren Verbraucher 6, 8, 10 einnehmen können, die an die entsprechenden Arbeitsanschlüsse B, C bzw. D angeschlossen sind. Wie vorstehend beschrieben, liegt der Innenkolben 94 auch bei den Stromventilen 14, 16, 18 der lastniedrigeren Verbraucher in seiner rechten Endposition an der Verschlussschraube 44 an. Dabei wird in die Federräume 88 der Stromventile 14, 16, 18 das Signal der Druckwaage 26 des Stromventils 12 gemeldet, so dass in den Federräumen 88 ebenfalls der höchste Lastdruck von 400 bar anliegt. Zu Beginn der Ansteuerung fließt das Druckmittel zunächst zu den Verbrauchern mit dem niedrigsten hydraulischen Widerstand - beim Teilen zu den lastniedrigeren Verbrauchern. Demzufolge werden die Druckwaagenkolben 43 der Stromventile 14, 16, 18 aufgrund des jeweils im LS-Federraum 88 wirkenden höchsten Lastdrucks aus der Mittelposition gegen die Kraft der Zentrierfeder 52 nach rechts verschoben und entsprechend durch die "Teilen"-Steuerkante 82 der Strömungsquerschnitt zwischen dem Druckwaagenkolben 43 und dem Ringsteg 57 zugesteuert, so dass die Druckmittelströmung angedrosselt wird. Die Druckmittelströmung wird soweit abgedrosselt bis das Kräftegleichgewicht an allen Druckwaagen gegeben ist und die Mengen druckunabhängig zu den Verbrauchern strömen. Im vorliegenden Beispiel heißt das, dass die Druckwaage des lastniedrigsten Verbrauchers relativ weit schließt, während die Druckwaagen der beiden lasthöheren Verbraucher (200 bar, 300 bar) Zwischenpositionen zwischen der in Figur 4a) dargestellten Ruheposition und der in Figur 5 dargestellten Position mit geringem Durchflussquerschnitt einnehmen. Durch die Verschiebung des Druckwaagenkolbens 43 nach rechts gegenüber dem an der verschlussschraube 44 anliegenden Innenkolben 94 wird gemäß Figur 4 über die Steuerkante 110 des Innenkolbens 94 und zugeordnete gehäusefeste Steuerkante 114 der LS-Querschnitt 112 zugesteuert, so dass die Verbindung zwischen den Radialbohrungen 98 und dem LS-Federraum 88 unterbrochen ist (siehe Ruhestellung Figur 4a). In seinen in Figur 4c) dargestellten Regelpositionen liegt der Steuerbund 100 etwa im dem Bereich, in dem der Steg zwischen dem Federraum 88 und den Radialbohrungen 98 ausgebildet ist. Der Druck am Ausgang der Zumessblende 24 wird dann über die Radialbohrungen 98, den vom Abschnitt 105 der Führungsbohrung begrenzten Ringspalt, den sich daran anschließenden Ringspalt zwischen dem Außenumfang des Innenkolbens 94 und der Innenumfangswandung der Führungsbohrung 92 sowie über die Längskerbe 106 des Radialbunds 102 in den Federraum 86 gemeldet, so dass der Druckwaagenkolben 43 links vom höchsten Lastdruck und rechts vom Druck stromabwärts der Messblende 24 beaufschlagt ist.

Die kleinen Längskerben 104 und 106 des Innenkolbens sowie der Ringraum zwischen dem Innenkolben 94 und der Führungsbohrung haben zusätzlich noch die Funktion, dass über diesen Steuerölströmungspfad während einer Regelbewegung des Druckwaagenkolbens 43 Steueröl aus dem sich verkleinernden Federraum verdrängt werden kann. Eine Verdrängung des Steueröls aus dem LS-Federraum 88 über die LS-Leitung 22 reicht in diesem Fall nicht immer aus und geht des weiteren auch beispielsweise bei einem Wechsel der lastdruckextremsten Druckwaage nicht immer schnell genug.

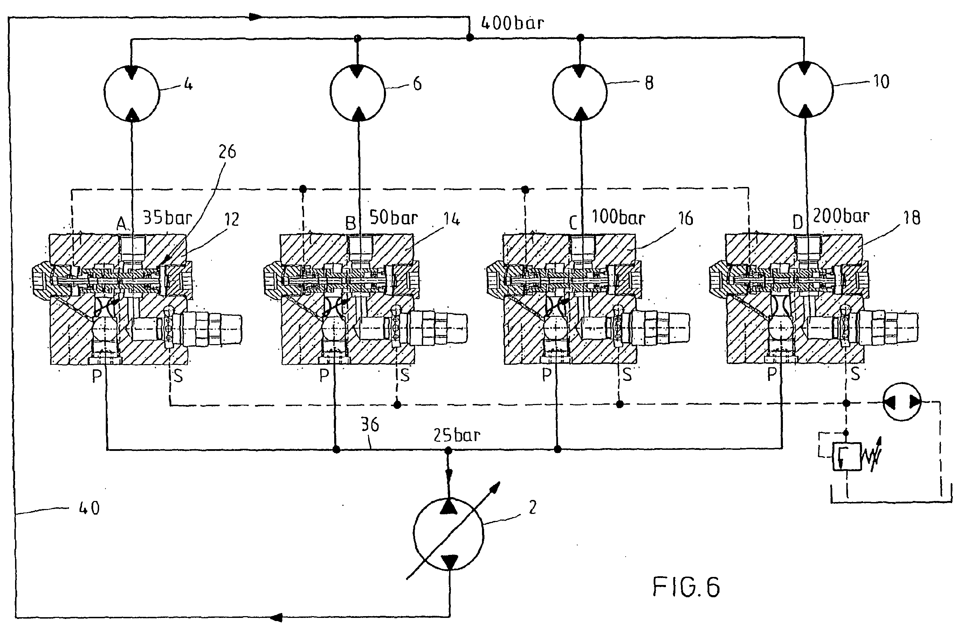

Figur 6 zeigt das Figur 1 entsprechende Funktionsschaubild für den Betriebszustand "Summieren". Es sei angenommen, dass am lastdruckniedrigsten Verbraucher 4 ein Lastdruck von 35 bar anliegt, während der Lastdruck der anderen Verbraucher 50, 100 bzw. 200 bar beträgt. Die am Eingang P der Verstellpumpe 2 zu summierenden Druckmittelvolumenströme haben einen Druck von 25 bar, während in der vom Anschluss R zu den Verbrauchern 4, 6, 8, 10 führenden Rücklaufleitung 40 (dient eigentlich als Zulaufleitung) ein Druck von 400 bar anliegt.

Aufgrund des niedrigen Drucks in der Zulaufleitung 36 (25 bar) wird der Innenkolben 94 durch den auf seine rechte Stirnfläche wirkenden höheren Druck nach links verschoben bis er mit seiner linken Stirnfläche am Boden des Druckraumes 70 der Verschlussschraube 46 anliegt. Dieses Umschalten erfolgt gemäß Figur 6 bei allen Stromventilen 12, 14, 16, 18.

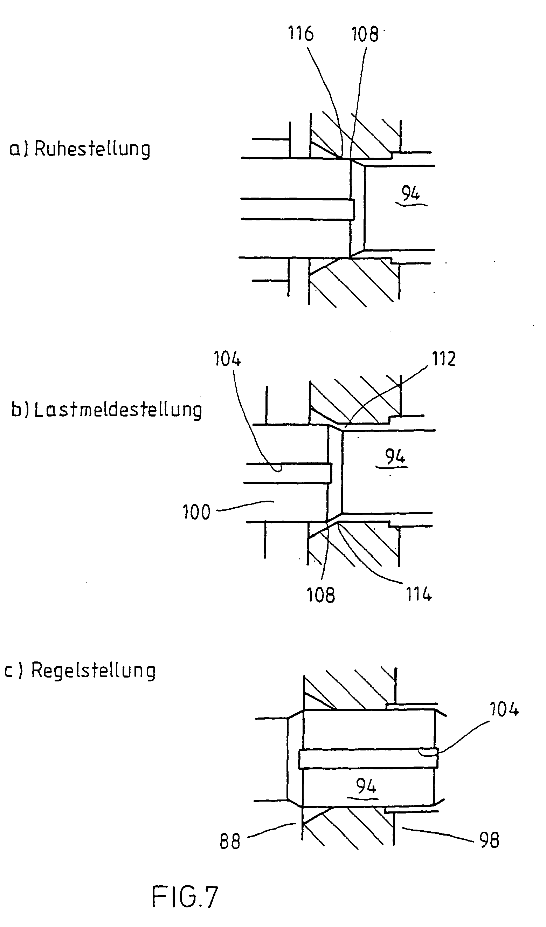

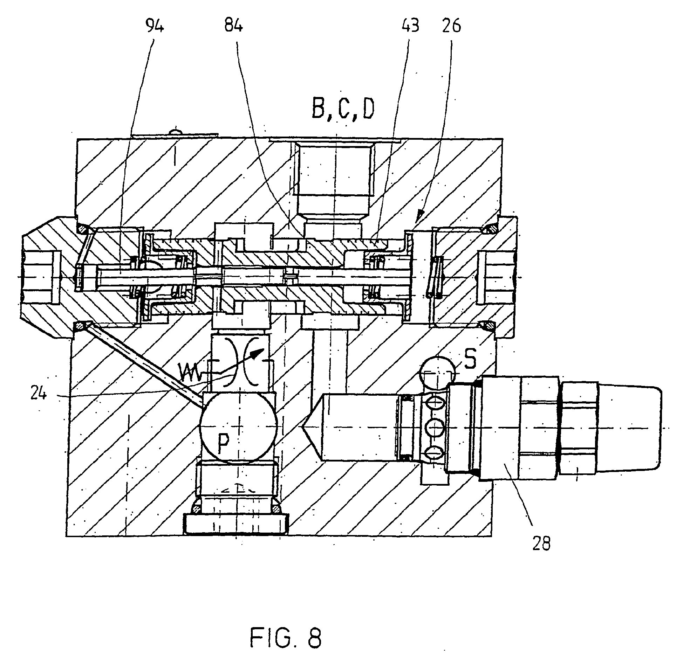

Zu Beginn der Ansteuerung strömt das Druckmittel zu den Druckwaagen der Verbraucher mit dem niedrigsten hydraulischen Widerstand - beim Summieren sind dies die lasthöheren Verbraucher, so dass deren Druckwaagen zuerst reagieren. Die Druckwaage 26 des lastniedrigsten Verbrauchers 4 verbleibt oder verfährt in ihre Mittelstellung. Die Axiallänge des Steuerbundes 100 ist so gewählt, dass durch die Verschiebung des Innenkolbens 94 gegenüber dem Druckwaagenkolben 43 nach links nunmehr die rechte LS-Steuerkante 108 wirksam wird. Dies ist in Figur 7b) dargestellt. In dieser Lastmeldestellung der dem lastniedrigsten Verbraucher zugeordneten Druckwaage 26 (Innenkolben 94 nach links verschoben, Druckwaagenkolben 43 in seiner Mittelstellung) steuert die LS-Steuerkante 108 einen LS-Querschnitt 112 auf, der gehäuseseitig durch eine federraumseitige Steuerkante 114 begrenzt ist. Über den aufgesteuerten LS-Querschnitt 112 wird die Verbindung zwischen dem Druckraum 54 und dem LS-Federraum 88 geöffnet, so dass der niedrigste Lastdruck (35 bar) in die LS-Leitung 22 gemeldet und somit in allen LS-Federräumen der. Stromventile 12, 14, 16, 18 anliegt. Dieser niedrigste Lastdruck wirkt auch auf die rechte Stirnfläche des Druckwaagenkolbens 43 des Stromventils 12, so dass dieses in seiner Mittelstellung verbleibt. Durch die Druckmittelströmung zu den anderen Druckwaagen der lasthöheren Verbraucher werden deren Druckwaagenkolben 43, wie in Figur 8 gezeigt, nach links in eine Regelposition (siehe auch Figur 7c)) verschoben. In dieser Regelposition wird über die "Summieren"-Steuerkante 84 der Öffnungsquerschnitt der Druckwaagen 26 der lasthöheren Verbraucher 14,16,18 verändert und die Druckmittelströmung angedrosselt bis ein Kräftegleich-gewicht erreicht ist. Das Druckmittel kann somit von den Verbrauchern lastdruckunabhängig zurückströmen, wobei der Druckabfall über den jeweiligen Zumessblenden 24 konstant gehalten wird. Je nach Lastdruck an den lastdruckhöheren Verbrauchern nimmt der Druckwaagenkolben 43 in seiner Gleichgewichtslage eine Relativposition mit Bezug zum Innenkolben 94 ein, die zwischen einer Ruhestellung (Fig. 7a)) und der dargestellten Regelstellung (Fig. 7c)) liegt. In der Ruhestellung gemäß Figur 7a) ist der LS-Querschnitt durch die Steuerkanten 108, 114 zugesteuert, während in der dargestellten Regelpositionen der Steuerbund 94 durch Axialverschiebung des Druckwaagenkolbens 43 aus der Ruhestellung heraus nach links im Bereich des Stegs zwischen den Radialbohrungen 98 und dem LS-Federraum 88 liegt.

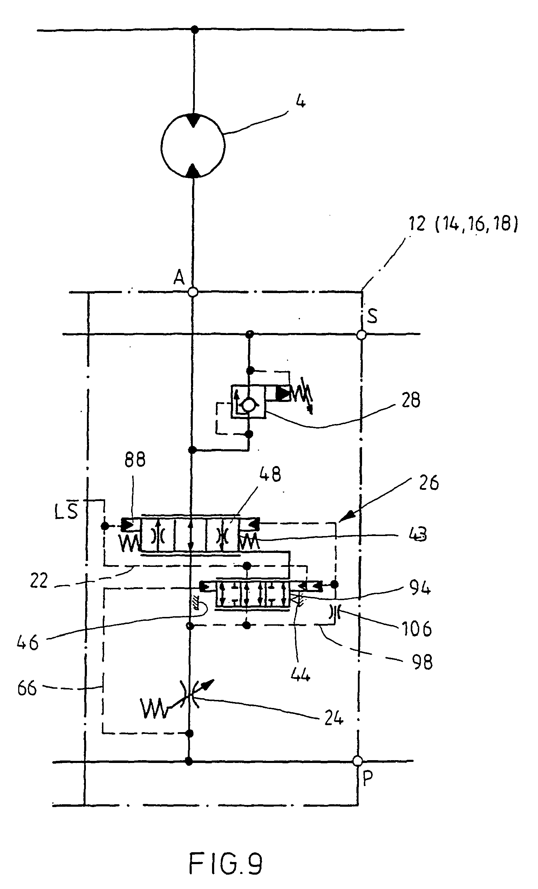

In Figur 9 ist das Schaltsymbol der erfindungsgemäßen Stromventile dargestellt. Das beispielsweise dem Verbraucher 4 zugeordnete Ventilsegment ist strichpunktiert angedeutet und hat die Anschlüsse P, S, A und LS. Im Ventilsegment sind das Druck-Einspeiseventil 28, die variable Zumessblende 24 und die Druckwaage 26 mit dem 2/2-Wegeventil dargestellt, das bei der konkreten Lösung durch den im Druckwaagenkolben 43 geführten Innenkolben 94 gebildet ist. Wie in Figur 9 angedeutet, ist dieser Innenkolben 94 mechanisch mit der Druckwaage 26 verbunden. Auf die linke Stirnfläche des Innenkolbens 94 wirkt der über den Schrägkanal 66 abgegriffene Pumpendruck, während auf die rechte Stirnfläche der über die Radialbohrungen 98 abgegriffene Druck im Druckmittelströmungspfad zwischen der Zumessblende 24 und der Druckwaage 26 wirkt. Beim "Teilen" wird der Innenkolben 94 gegen einen gehäusefesten Anschlag, im vorliegenden Fall die Verschlussschraube 44 bewegt, beim "Summieren" liegt der Innenkolben 94 an dem durch die Verschlussschraube 46 gebildeten Anschlag an.

In der offenen Grundposition der Druckwaage 26 wird über den Innenkolben 94 und das entsprechend umgeschaltete 2/2-Wegeventil der Druck zwischen der Zumessblende 24 und der Druckwaage 26 in den LS-Federraum 88 und damit in die LS-Leitung 22 gemeldet und liegt somit an allen LS-Federräumen 88 der Stromventile an. Beim Verschieben der Druckwaage aus der Öffnungsposition in eine Regelposition wird der Innenkolben 94 durch die mechanische Kopplung in eine der dargestellten Sperrpositionen verfahren, so dass der Druck im Druckmittelströmungspfad von der Zumessblende 24 zur Druckwaage 26 über das 2/2-Wegeventil (Innenkolben 94) nicht mehr abgegriffen werden kann. Der Druck in der LS-Leitung 22 beaufschlagt auch die in Figur 9 rechte Stirn-fläche des Innenkolbens 94.

Der Druckwaagenkolben 43 ist einerseits durch den Druck im LS-Kanal 22 und andererseits durch den über die Längskerbe 106 abgegriffenen Druck zwischen Zumessblende 24 und der Druckwaage 26 beaufschlagt, wobei der Druckmittelvolumenstrom bei Kräftegleichgewicht durch die Druckwaage 26 so angedrosselt ist, dass der Druckabfall über der Messblende 24 lastunabhängig konstant ist.

Wie bereits erwähnt, reagiert zu Beginn einer Ansteuerung jeweils die Druckwaage 26 als erste, die den Verbraucher mit dem geringsten hydraulischen Widerstand zugeordnet ist und die demgemäß am Anfang die größte Druckmittelmenge erhält. Beim "Teilen" ist dies die dem lastniedrigsten Verbraucher zugeordnete Druckwaage, während beim "Summieren" die Druckwaage als erstes reagiert, die dem lasthöchsten Verbraucher zugeordnet ist.

Offenbart sind ein Stromventil und ein Stromteiler zur Druckmittelversorgung mehrerer Verbraucher. Jedes Stromventil hat eine Zumessblende und eine Druckwaage. Ein Druckwaagenkolben der Druckwaage ist mit zwei Steuerkanten versehen, von denen eine beim "Summieren" von Druckmittelströmen und die andere beim "Teilen" eines Druckmittelstroms wirksam ist. Das Stromventil hat des Weiteren zumindest eine LS-Steuerkante, über die bei geöffneter Druckwaage ein LS-Querschnitt aufsteuerbar ist, über den ein dem Lastdruck entsprechender Druck in eine Lastmeldeleitung gemeldet wird.

### Bezugszeichenliste:

- 1: Stromteiler
- 2: Verstellpumpe
- 4: Hydromotor
- 6: Hydromotor
- 8: Hydromotor
- 10: Hydromotor
- 12: Stromventil
- 14: Stromventil
- 16: Stromventil
- 18: Stromventil
- 20: Gehäusescheibe
- 22: LS-Leitung
- 24: Zumessblende
- 26: Druckwaage
- 28: Druckeinspeiseventil
- 30: Pumpe
- 32: Speisekanal
- 34: Speiseleitung
- 36: Zulaufleitung
- 38: Vorlaufleitung
- 40: Rücklaufleitung
- 42: Druckwaagenbohrung
- 43: Druckwaagenkolben
- 44: Verschlussschraube
- 46: Verschlussschraube
- 50: Zentrierfeder
- 52: Zentrierfeder
- 54: Ringraum
- 56: Ringraum
- 57: Ringsteg
- 58: Messblendenbohrung
- 60: Schraube
- 62: Winkelbohrung
- 64: Kammer
- 66: Schrägkanal
- 68: Ringkanal
- 70: Druckraum
- 72: Verbindungskanal
- 74: Federteller
- 76: Federteller
- 78: Aufnahme
- 80: Aufnahme
- 81: Steuernut
- 82: Teilen-Steuerkante
- 84: Summieren-Steuerkante
- 86: Federraum
- 88: LS-Federraum
- 90: Kanal
- 92: Führungsbohrung
- 94: Innenkolben
- 96: Führungsbund
- 98: Radialbohrungen
- 100: Steuerbund
- 102: Radialbund
- 104: Längskerbe
- 105: radial erweiteter Abschnitt
- 106: Längskerbe
- 108: LS-Steuerkante
- 110: LS-Steuerkante
- 112: LS-Querschnitt
- 114: gehäusefeste Steuerkante
- 116: federraumseitige Steuerkante

## Patentansprüche

1. Stromventil für einen Stromteiler zur Druckmittelversorgung mehrerer hydraulischer Verbraucher (4, 6, 8, 10) mit einer Druckwaage (26) und einer Zumessblende (24), der zum Stromteilen in Richtung zum Verbraucher (4, 6, 8, 10) und zum Summieren von Druckmittelströmen in Gegen-richtung durchströmbar ist, wobei die Druckwaage (26) einen in eine Grundstellung vorgespannten Druckwaagenkolben (43) hat, der einerseits vom Druck in einer LS-Leitung (22) und andererseits von einem Druck im Druckmittelströmungspfad zwischen der Zumessblende (24) und der Druckwaage (26) beaufschlagbar ist, **dadurch gekennzeichnet, dass** der Druckwaagenkolben (43) zwei Steuerkanten (82, 84) hat, von denen eine beim Summieren und die andere beim Teilen wirksam ist und dass des weiteren zumindest eine LS-Steuerkante (108, 110) vorhanden ist, über die bei geöffneter Druckwaage (26) zum Lastmelden in die LS-Leitung (22) ein LS-Querschnitt (112) zum Abgreifen des Drucks im Druckmittelströmungspfad aufsteuerbar ist.

2. Stromventil nach Patentanspruch 1, wobei die Druckwaage (26) in der Grundposition geöffnet ist.

3. Stromventil nach Patentanspruch 1 oder 2, wobei eine LS-Steuerkante (108) beim Summieren und eine andere LS-Steuerkante (110) beim Teilen wirksam ist und diese durch ein 2/2-Wegeventil ausgebildet sind.

4. Stromventil nach Patentanspruch 3, wobei das 2/2-Wegeventil durch einen Innenkolben (94) gebildet ist, der in einer Führungsbohrung (92) des Druckwaagenkolbens (43) geführt ist und einen Steuerbund (100) hat, an dessen beiden Ringstirnflächen die beiden LS-Steuerkanten (108, 110) angeordnet sind.

5. Stromventil nach Patentanspruch 4, wobei eine Stirnfläche des Innenkolbens (94) mit dem Pumpendruck und die andere Stirnfläche mit einem dem Lastdruck entsprechenden Druck beaufschlagbar ist.

6. Stromventil nach Patentanspruch 4 oder 5, wobei die LS-Leitung (22) in einem LS-Federraum (88) der Druckwaage (26) mündet und wobei über die LS-Steuerkanten (108, 110) des Steuerbunds (100) der LS-Querschnitt (112) zwischen den LS-Federraum (88) und einem einen Lastdruck führenden Kanal (98) des Druckwaagenkolbens (43) aufsteuerbar ist.

7. Stromventil nach Patentanspruch 6, wobei der LS-Federraum (88) über einen sich zwischen dem Innenkolben (94) und der Führungsbohrung (92) erstreckenden Verbindungskanal mit einem Federraum (86) verbunden ist, in den ein radial zurückgesetzter Innenkolbenendabschnitt eintaucht und dort gegen einen Anschlag (44) bewegbar ist.

8. Stromventil nach Patentanspruch 7, wobei ein anderer Endabschnitt des Innenkolbens (94) den LS-Federraum (88) durchsetzt und mit einem Führungsbund (96) in einem Druckraum (70) einer Verschlussschraube (46) geführt ist, der mit dem Pumpendruck beaufschlagt ist und einen Axialanschlag für den Innenkolben (94) hat.

9. Stromventil nach Patentanspruch 7 oder 8, wobei der Innenkolben (94) einen Radialbund (102) zur Führung des Innenkolbens (94) in der Führungsbohrung (92) hat und wobei am des Radialbund (98) und am Steuerbund (100) Längskerben (104, 106) ausgebildet und daran angrenzende Bereiche des Innenkolbens (94) mit Radialspiel zur Ausbildung eines Verbindungskanals ausgeführt ist.

10. Stromventil nach einem der vorhergehenden Patentansprüche, wobei der Druckwaagenkolben (43) eine mittlere Steuernut (81) hat, an deren Ringstirnflächen die beiden Steuerkanten (82, 84) ausgeführt sind und wobei der Druckwaagenkolben (43) über zwei Zentrierfedern (50, 52) in eine Mittelstellung vorgespannt ist.

11. Stromventil nach Patentanspruch 10, wobei der Druckwaagenkolben (43) zumindest eine Radialbohrung (98) hat, die einerseits im Bereich des Steuerbunds (100) in der Führungsbohrung (92) und andererseits in einem den Lastdruck führenden Raum (54) münden.

12. Stromventil nach einem der vorhergehenden Patentansprüche, mit einem Druck-Einspeiseventil (28).

13. Stromteiler zur Druckmittelversorgung mehrerer Verbraucher, der mehrere Stromventile (12, 14, 16, 18) gemäß einem der vorhergehenden Patentansprüche aufweist.

## Claims

1. Flow valve for a flow distributor for the pressure fluid supply of several hydraulic consumers (4, 6, 8, 10) comprising a pressure regulator (26) and a metering orifice (24) which can be flown through for dividing a flow in the direction of the consumer (4, 6, 8, 10) and for accumulating pressure fluid flows in the opposite direction, wherein the pressure regulator (26) includes a pressure regulator piston (43) biased into a home position to which, one the one hand, pressure prevailing in a LS line (22) can be applied and, on the other hand, pressure prevailing in the pressure fluid flow path between the metering orifice (24) and the pressure regulator (26) can be applied, **characterized in that** the pressure regulator piston (43) includes two control edges (82, 84) one of which is active during accumulating and the other is active during dividing and that, moreover, at least one LS control edge (108, 110) is provided by which, when the pressure regulator (26) is opened, for load-indicating into the LS line (22) a LS cross-section (112) can be controlled to be opened for tapping off the pressure prevailing in the pressure fluid flow path.

2. Flow valve according to claim 1, wherein the pressure regulator (26) is opened in the home position.

3. Flow valve according to claim 1 or 2, wherein a LS control edge (108) is active during accumulating and another LS control edge (110) is active during dividing and these control edges are formed by a 2/2 port directional control valve.

4. Flow valve according to claim 3, wherein the 2/2 port directional control valve is formed by an internal piston (94) guided in a guide bore (92) of the pressure regulator piston (43) and including a control collar (100) at the two annular end faces of which the two LS control edges (108, 110) are arranged.

5. Flow valve according to claim 4, wherein the pump pressure can be applied to one end face of the internal piston (94) and a pressure corresponding to the load pressure can be applied to the other end face.

6. Flow valve according to claim 4 or 5, wherein the LS line (22) opens into a LS spring chamber (88) of the pressure regulator (26) and wherein the LS cross-section (112) between the LS spring chamber (88) and a passage (98) of the pressure regulator piston (43) guiding the load pressure can be controlled to be opened via the LS control edges (108, 110) of the control collar (100).

7. Flow valve according to claim 6, wherein the LS spring chamber (88) is communicated via a communicating passage extending between the internal piston (94) and the guide bore (92) with a spring chamber (86) into which a radially set-back end portion of the internal piston immerses and there is movable against a stop (44).

8. Flow valve according to claim 7, wherein another end portion of the internal piston (94) passes through the LS spring chamber (88) and is guided by a guiding collar (96) in a pressure chamber (70) of a screw plug (46) to which the pump pressure is applied and which includes an axial stop for the internal piston (94).

9. Flow valve according to claim 7 or 8, wherein the internal piston (94) includes a radial collar (102) for guiding the internal piston (94) in the guide bore (92) and wherein longitudinal notches (104, 106) are formed at the radial collar (98) and at the control collar (100) and adjacent areas of the internal piston (94) are designed to have radial play for forming a communicating passage.

10. Flow valve according to any one of the preceding claims, wherein the pressure regulator piston (43) includes a central control groove (81) at the annular end faces of which the two control edges (82, 84) are formed and wherein the pressure regulator piston (43) is biased into a central position via two centering springs (50, 52).

11. Flow valve according to claim 10, wherein the pressure regulator piston (43) has at least one radial bore (98) opening, on the one hand, in the area of the control collar (100) into the guide bore (92) and, on the other hand, into a chamber (54) guiding the load pressure.

12. Flow valve according to any one of the preceding claims, comprising a pressure feed valve (28).

13. Flow distributor for the pressure fluid supply of several consumers, having several flow valves (12, 14, 16, 18) according to any one of the preceding claims.

## Revendications

1. Régulateur de débit pour un diviseur de débit pour alimenter plusieurs consommateurs hydrauliques (4, 6, 8, 10) avec un fluide sous pression, comportant une balance de pression (26) et un obturateur de dosage (24) qui, pour la division du débit, laisse passer le fluide vers le consommateur (4, 6, 8, 10) et, pour l'addition des flux de fluide sous pression, laisse passer le fluide dans le sens opposé, la balance de pression (26) comportant un piston (43) précontraint dans une position de base, qui peut être sollicité, d'une part, par la pression dans une conduite de détection de charge (load sensing) (22) et, d'autre part, par une pression dans la voie de circulation du fluide sous pression entre l'obturateur de dosage (24) et la balance de pression (26), dans lequel le piston (43) de la balance de pression comporte deux bords de commande (82, 84), dont l'un est actif lors de l'addition et l'autre est actif lors de la division, et en ce qu'il est prévu, en outre, au moins un bord de commande de détection de charge (108, 110), par l'intermédiaire duquel, lorsque la balance de pression (26) est ouverte pour signaler la charge dans la conduite de détection de charge (22), peut être commandée l'ouverture d'une section de détection de charge (112) pour prélever la pression dans la voie de circulation du fluide sous pression.

2. Régulateur de débit selon la revendication 1, dans lequel la balance de pression (26) est ouverte dans la position de base.

3. Régulateur de débit selon la revendication 1 ou 2, dans lequel un bord de commande de détection de charge (108) est actif lors de l'addition et un autre bord de commande de détection de charge (110) est actif lors de la division, et ceux-ci sont réalisés par un distributeur à 2/2 voies.

4. Régulateur de débit selon la revendication 3, dans lequel le distributeur à 2/2 voies est formé par un piston intérieur (94), qui est logé dans une forure de guidage (92) du piston (43) de la balance de pression et qui comporte une collerette de commande (100), sur les deux faces frontales annulaires de laquelle sont agencés les deux bords de commande de détection de charge (108, 110).

5. Régulateur de débit selon la revendication 4, dans lequel une face frontale du piston intérieur (94) est sollicitée par une pression de pompage et l'autre face frontale est sollicitée par une pression correspondant à la pression de charge.

6. Régulateur de débit selon la revendication 4 ou 5, dans lequel la conduite de détection de charge (22) débouche dans une chambre à ressort de détection de charge (88) de la balance de pression (26), et dans lequel la section de détection de charge (112) entre la chambre à ressort de détection de charge (88) et un canal (98) du piston de la balance de pression (43), guidant la pression de charge, peut être commandée en ouverture par l'intermédiaire des bords de commande de détection de charge (108, 110) de la collerette de commande (100).

7. Régulateur de débit selon la revendication 6, dans lequel la chambre à ressort de détection de charge (88) est reliée via un canal de liaison, qui s'étend entre le piston intérieur (94) et la forure de guidage (92), à une chambre à ressort (86), dans laquelle pénètre une zone d'extrémité, radialement en retrait, du piston intérieur, laquelle peut être déplacée contre une butée (44).

8. Régulateur de débit selon la revendication 7, dans lequel une autre zone d'extrémité du piston intérieur (94) traverse la chambre à ressort de détection de charge (88) et est guidée avec une collerette de guidage (96) dans une chambre sous pression (70) d'un bouchon fileté (46), laquelle est sollicitée par une pression de pompage et comporte une butée axiale pour le piston intérieur (94).

9. Régulateur de débit selon la revendication 7 ou 8, dans lequel le piston intérieur (94) comporte une collerette radiale (102) pour guider le piston intérieur (94) dans la forure de guidage (92) et dans lequel des encoches longitudinales (104, 106) sont réalisées sur la collerette radiale (98) et sur la collerette de commande (100) et des zones du piston intérieur (94), adjacentes à ces encoches longitudinales, sont conçues avec un jeu radial pour former un canal de liaison.

10. Régulateur de débit selon l'une quelconque des revendications précédentes, dans lequel le piston de la balance de pression (43) comporte une rainure de guidage (81) centrale, sur les faces frontales annulaires de laquelle sont réalisés les deux bords de commande (82, 84) et dans lequel le piston (43) de la balance de pression est précontraint dans une position centrale par deux ressorts de centrage (50, 52).

11. Régulateur de débit selon la revendication 10, dans lequel le piston (43) de la balance de pression comporte au moins une forure radiale (98), qui débouche, d'une part, dans la zone de la collerette de commande (100) dans la forure de guidage (92) et, d'autre part, dans une chambre (54) guidant la pression de charge.

12. Régulateur de débit selon l'une quelconque des revendications précédentes, comportant une vanne d'admission de pression (28).

13. Diviseur de débit pour alimenter plusieurs consommateurs avec un fluide sous pression, lequel comporte plusieurs régulateurs de débit (12, 14, 16, 18) selon une des revendications précédentes.
